Europäisches Patentamt

European Patent Office

Office européen des brevets

(19)

(11) Numéro de publication : **0 446 087 A1**

(12) # DEMANDE DE BREVET EUROPEEN

(21) Numéro de dépôt : **91400375.1**

(51) Int. Cl.⁵ : **F16H 3/08, F16H 59/04**

(22) Date de dépôt : **14.02.91**

(30) Priorité : 06.03.90 FR 9002779

(43) Date de publication de la demande :
**11.09.91 Bulletin 91/37**

(84) Etats contractants désignés :
**DE ES GB IT**

(71) Demandeur : REGIE NATIONALE DES USINES
**RENAULT S.A.**
**34, Quai du Point du Jour**
**F-92109 Boulogne Billancourt (FR)**

(72) Inventeur : **Briec, Alain**
**27, rue Trousseau**
**F-75011 Paris (FR)**

(74) Mandataire : **Ernst-Schonberg, Michel et al**
**REGIE NATIONALE DES USINES RENAULT**
**S.A, 34, Quai du Pont du Jour**
**F-92109 Boulogne Billancourt (FR)**

(54) **Dispositif de commande d'une boîte de vitesses mécanique.**

(57) Le dispositif de commande d'une boîte de vitesses mécanique comportant un arbre primaire (1) et un arbre secondaire (3) parallèles portant les pignons correspondants aux différents rapports, boîte de vitesses dans laquelle le changement de rapport s'effectue par le déplacement axial du croisillon (12) sur l'arbre (3) portant les pignons fous (5), caractérisé en ce que ledit croisillon (12) est actionné au moyen d'un système vis-écrou, l'écrou (13) étant monté dans le croisillon (12) et la vis (14) étant à l'intérieur de l'arbre correspondant (3) et supportée à chaque extrémité par le carter (27) de l'ensemble de la boîte de vitesses avec lequel elle est fixée en translation, l'écrou (13) étant solidaire en translation axiale avec le croisillon (12) qui est libre en rotation par rapport audit écrou (13), l'écrou (13) étant immobilisé en rotation par rapport au carter, ledit croisillon (12) est solidaire en rotation de l'arbre secondaire (3) et est solidarisé avec le pignon fou correspondant au rapport choisi au moyen d'un système de crabotage et la vis (14) étant actionnée à une de ses extrémités par un système de manoeuvre.

EP 0 446 087 A1

FIG1

# DISPOSITIF DE COMMANDE D'UNE BOITE DE VITESSES MECANIQUE

La présente invention est relative à un dispositif de commande d'une boîte de vitesses mécanique.

Le principe des boîtes de vitesses à arbres parallèles où le crabotage des pignons fous sur l'arbre secondaire s'effectue par un déplacement axial d'un croisillon est connu. Généralement, le croisillon, logé à l'intérieur de l'arbre secondaire, comporte plusieurs dents guidées par des rainures percées dans l'arbre secondaire. Quand le croisillon se déplace axialement, les sommets de ces dents dont le diamètre de tête est supérieur au diamètre extérieur de l'arbre secondaire, viennent se loger dans des encoches percées dans l'alésage intérieur des pignons fous et solidarisent pignons et arbre secondaire.

Deux évidements, pratiqués dans l'alésage intérieur des pignons fous, de part et d'autre de ces encoches, permettent de disposer d'un point mort entre chaque paire de pignons adjacents.

Utilisé notamment sur des motocycles, ce type de dispositif présente les inconvénients suivants :

– il nécessite une commande axiale du déplacement du croisillon, dont la course totale entre les positions de crabotage des pignons extrêmes est sensiblement égale à la somme des largeurs des dentures des pignons. Le plus souvent, le croisillon est monté sur un axe de commande qui doit pouvoir parcourir la course totale de crabotage ; il faut donc disposer en bout de boîte, dans le prolongement de l'arbre secondaire, d'un espace libre d'une longueur au moins égale à la course totale de crabotage.

– les pignons fous étant empilés les uns sur les autres, l'utilisation de dentures hélicoïdales induit des frottements entre pignons ne tournant pas à la même vitesse, ainsi qu'un fort couple de basculement dont l'effet est accentué par la faible portée du fût.

– l'arbre secondaire percé de rainures ne peut supporter de forts couples.

La présente invention a pour but de proposer un dispositif de commande de changement de vitesse qui s'intègre dans l'encombrement de la boîte de vitesses, tout en permettant une automatisation facile de la commande.

Dans ce but, l'invention propose un dispositif de commande caractérisé en ce que le déplacement axial du croisillon est commandé par la rotation d'une vis à billes qui entraîne la translation axiale d'un écrou sur lequel est monté le croisillon.

Selon une autre caractéristique de l'invention, les pignons fous sont isolés les uns des autres par des écarteurs qui font office de pistes de roulement et permettent de réduire les frottements entre pignons fous adjacents ainsi que le couple de basculement résultant de l'utilisation de dentures hélicoïdales.

Selon une autre caractéristique de l'invention, l'arbre secondaire bénéficie à son extrémité rainurée d'un dispositif d'appui qui permet d'obturer les rainures, de limiter la flexion de l'arbre ainsi que de maintenir axialement les pignons fous et les écarteurs.

Selon une autre caractéristique de l'invention, les extrémités des dents du croisillon et les encoches des pignons fous sont munies de rampes d'engagement, ainsi que de deux légères inclinaisons sur leurs flancs, qui permettent d'obtenir un effet antilâcher et autocentrant des dents du croisillon dans les encoches.

Selon une autre caractéristique de l'invention, la semi-automatisation ou l'automatisation totale des changements de rapport peut être obtenue en commandant la rotation de la vis à billes par l'intermédiaire d'un moteur électrique associé à un dispositif de comptage des tours effectués par le moteur ou la vis à billes, l'ensemble étant piloté par un mircroprocesseur. Dans le cas d'une semi-automatisation, le changement de rapport peut être déclenché par une impulsion électrique délivrée par un levier ; dans le cas d'une automatisation totale, le changement de rapport est déclenché par le microprocesseur gardant en mémoire les lois de passage.

D'autres caractéristiques et avantages de la présente invention ressortiront de la description qui suit le mode de réalisation donné à titre d'exemple en référence aux dessins annexés sur lesquels :

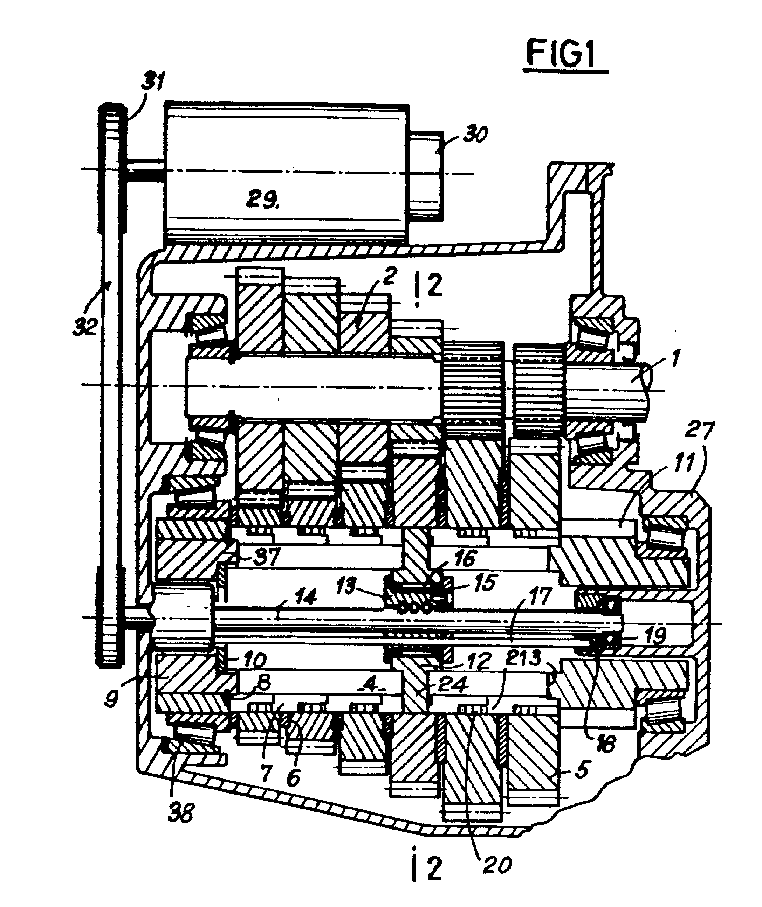

– la figure 1 est une coupe axiale de l'ensemble d'une boîte de vitesses avec son dispositif de commande selon l'invention ;

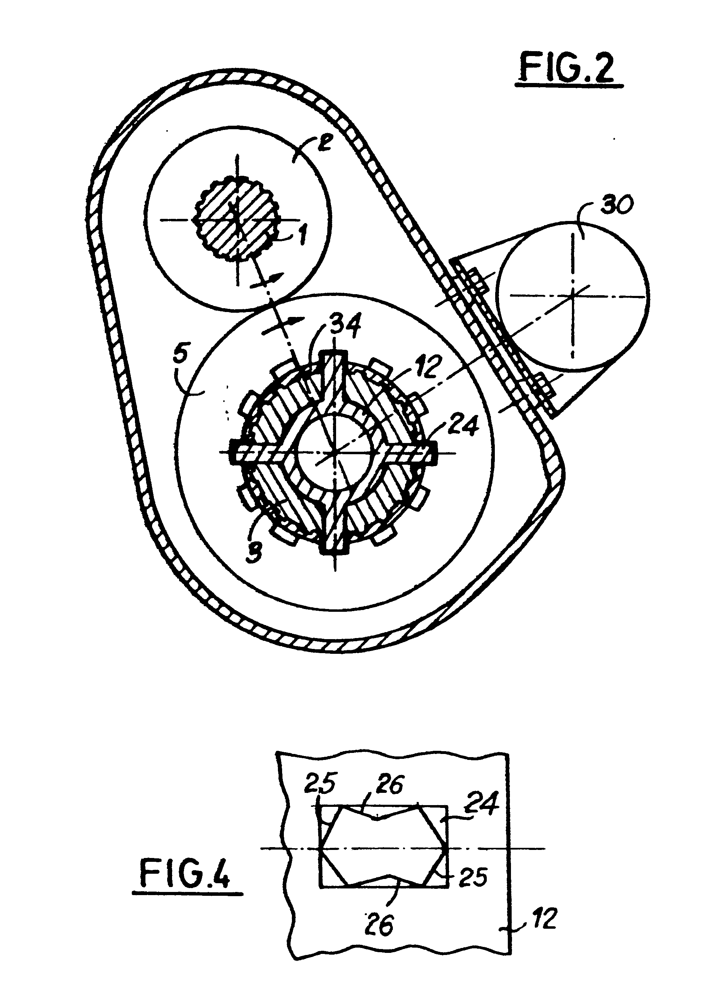

– la figure 2 est une coupe suivant 2 de la figure 1 ; le système vis-écrou n'étant pas représenté ;

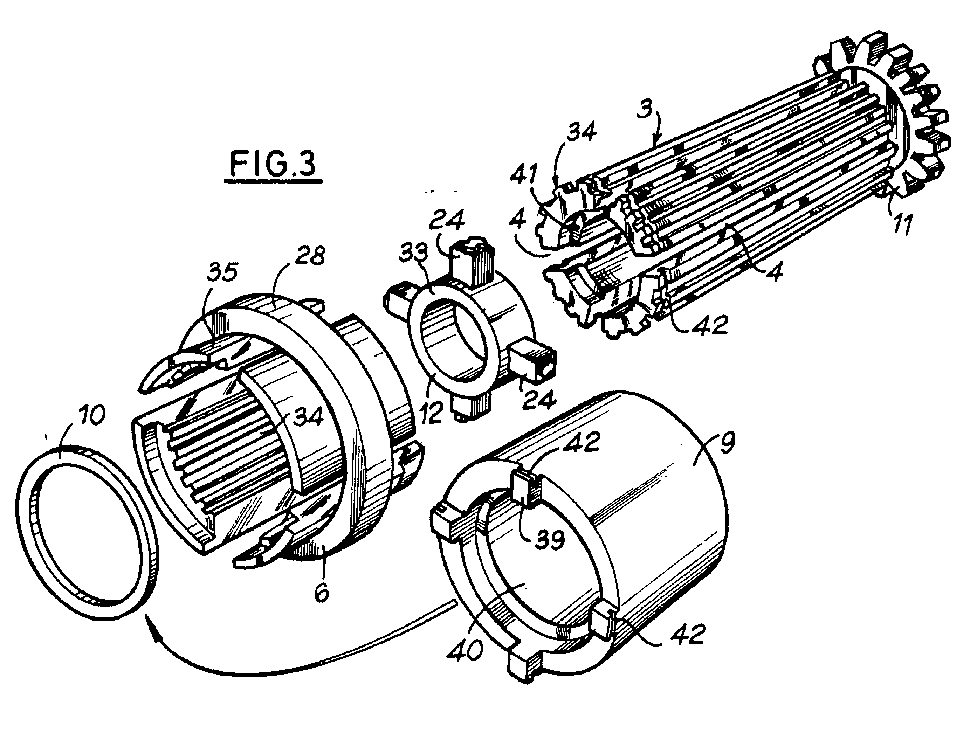

– la figure 3 est l'ensemble partiel en perspective de l'arbre secondaire correspondant à la figure 1 ;

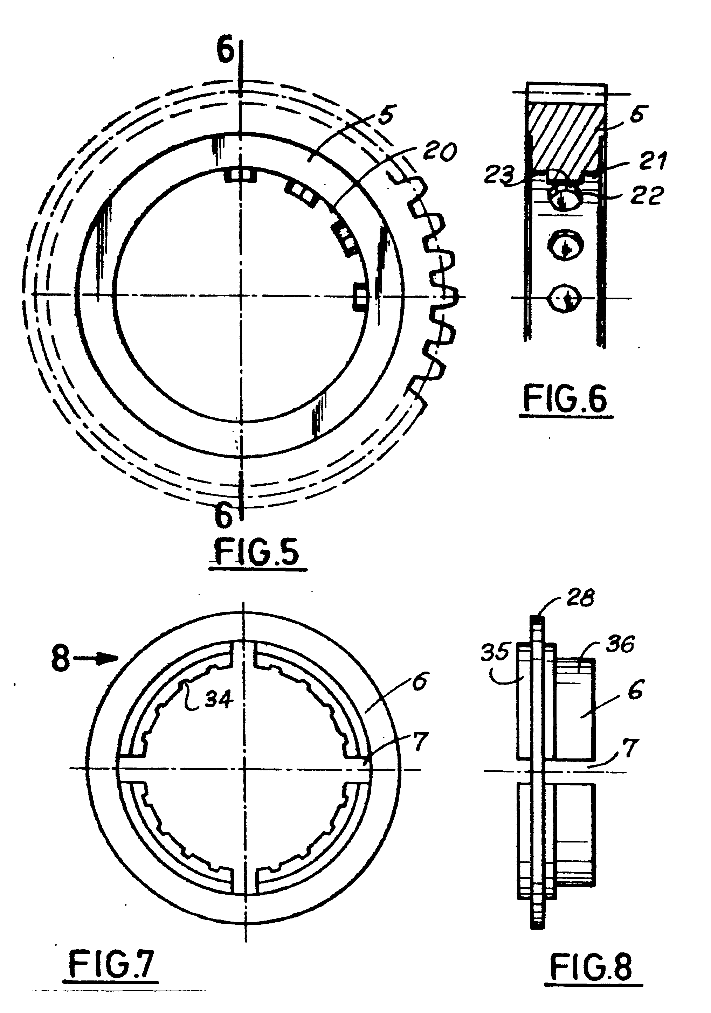

– la figure 4 représente le détail d'une dent du croisillon selon l'invention ;

– la figure 5 représente un pignon fou selon l'invention ;

– la figure 6 est une coupe suivant 6 de la figure 5 ;

– la figure 7 représente un écarteur selon l'invention ;

– la figure 8 est une vue suivant 8 de la figure 7 ;

– la figure 9 représente en coupe axiale le détail du montage des pignons fous ;

– la figure 10 est analogue à la figure 9 avec un pignon craboté.

Le dispositif de changement de vitesse comporte un arbre primaire 1 sur lequel sont empilés des pignons primaires 2, en prise avec des pignons fous 5 de l'arbre secondaire 3.

L'arbre secondaire 3 est creux extérieurement, muni de rainures 4 et est intégré au pignon de descente 11.

Sur l'arbre secondaire 3 viennent se monter des écarteurs 6 cannelés intérieurement et également munis de rainues 7 ; ces écarteurs 6 tournent avec l'arbre secondaire 3.

Chaque pignon fou 5 est associé à un écarteur 6 et comporte des encoches 20 brochées dans son alésage intérieur, ainsi que deux évidements 21 pratiqués de part et d'autre de ces encoches 20. Quand un pignon fou n'est pas craboté, il roule donc sur le dispositif d'écarteurs 6 par l'intermédiaire des deux évidements latéraux 21, et éventuellement il peut rouler sur sa partie centrale.

L'ensemble des pignons fous 5 et des écarteurs 6 est maintenu axialement sur l'arbre secondaire 3 d'une part par le pignon de descente 11, d'autre part par un circlips 8. Un appui 9 obture les rainures 4 de l'arbre secondaire 3 et est solidarisé en translation à l'arbre secondaire 3 par le même circlips 8, et il maintient une pièce annulaire 10 qui offre un appui à l'extrémité rainurée de l'arbre secondaire 3.

Un dispositif de crabotage est logé à l'intérieur de l'arbre secondaire 3. Il se compose d'un croisillon 12, dont le nombre de dents 24 est égal au nombre de rainures 4 et 7 aménagées respectivement dans l'arbre secondaire 3 et dans les écarteurs 6. Le croisillon 12 est monté sur un système vis-écrou à billes comportant un écrou 13 et une vis 14. Le croisillon 12 est monté sur l'écrou 13 au moyen d'une douille 15 et d'une cage à aiguilles 16 de manière à réduire les frottements entre le croisillon 12 et l'écrou 13.

Le croisillon 12 est solidaire en translation de l'écrou 13, qui est guidé en translation par une tige 17 qui le bloque en rotation. La tige 17 est fixée dans le carter 27 par deux anneaux 18 solidaires du carter par cannelures.

La rotation de la vis à billes 14, entraîne un déplacement axial de l'ensemble écrou 13 et croisillon 12 ; ce qui permet d'effectuer le crabotage, quand les dents 24 du croisillon 12 s'engagent dans les encoches 20 du pignon fou 5.

L'espace nécessaire à un arbre de commande axiale classique du croisillon 12 est donc libéré.

Dans un mode de réalisation de l'invention, lorsque l'on a des dentures de pignons 5 hélicoïdales, l'anneau 28 qui est aménagé sur chaque écarteur 6 offre un appui axial au pignon fou 5 qui est craboté.

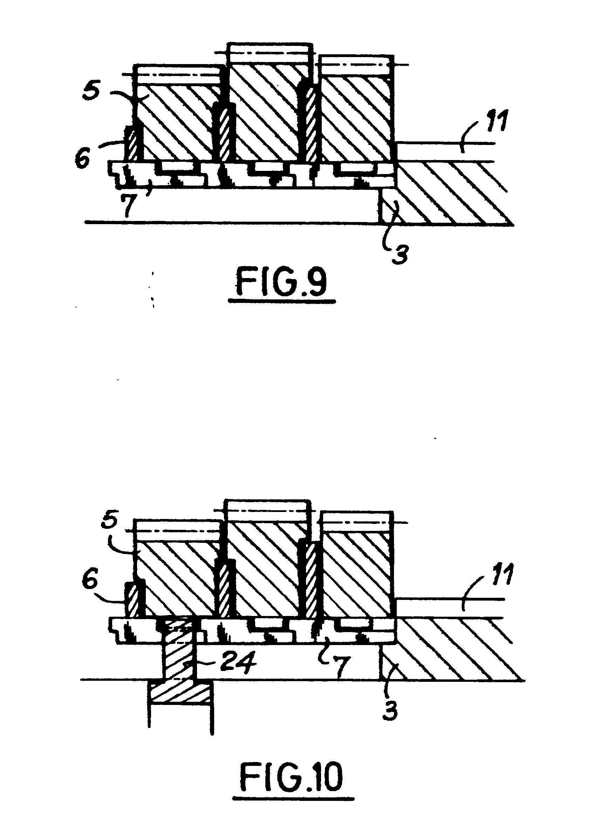

La force axiale résultante ne tend pas à resserrer les pignons fous 5 les uns sur les autres, mais se transmet par l'intermédiaire des écarteurs 6 comme cela est représenté sur la figure 10. Les frottements entre les pignons 5 ne tournant pas à la même vitesse sont donc annulés.

Cet appui axial permet, également, de réduire le couple de basculement induit par l'inclinaison des dentures. Enfin, les écarteurs 6 font office de pistes de roulement, pour les pignons fous 5, les pignons 5 tournant sur les évidements latéraux 21 et sur leur partie centrale où sont situées les encoches 20.

Les rainures 4 de l'arbre secondaire 3 sont obturées en bout d'arbre par un appui 9 qui est solidarisé en translation avec l'arbre secondaire 3 par un circlips 8. Le dispositif permet de maintenir la pièce annulaire 10 qui sert d'appui à l'extrémité de l'arbre secondaire 3.

Le couple transmissible est ainsi augmenté, et la flexion-torsion de l'arbre secondaire 3 est diminuée.

Les dents 24 du croisillon 12 ainsi que les encoches 20 des pignons fous 5 sont munies respectivement de pentes d'engagement 25 et 22. Les encoches 20 des pignons extrêmes peuvent être munies de pentes d'engagement 22 que d'un seul côté. Pour faciliter le crabotage, le nombre d'encoches 20 peut être un multiple du nombre de dents 24 du croisillon 12.

Les dents 24 du croisillon 12 peuvent être également munies de légères pentes antilâcher 26 sur leurs flancs, des pentes antilâcher 23 conjuguées sont taillées sur les flancs des encoches 20, de manière à obtenir un effet antilâcher et autocentrant des dents 24 du croisillon 12 dans les encoches 20 des pignons fous 5.

L'automatisation ou la semi-automatisation des changements de rapport est obtenue en commandant la mise en rotation de la vis à billes 14 par l'intermédiaire d'un moteur électrique 29, associé à un dispositif de comptage 30 des tours effectués par le moteur 29 ou la vis à billes 14. L'ensemble est piloté par un micropocesseur. Le microprocesseur garde en mémoire le nombre de tours à effectuer pour atteindre la position commandée (point mort ou nouveau rapport). Dans le cas d'une automatisation partielle, le changement de rapport pourra se commander par action sur un levier à impulsions électriques. Dans le cas d'une automatisation totale, les changements de rapport seront déclenchés par le microprocesseur gardant en mémoire les lois de changements de rapport en fonction notamment de la vitesse et de la charge.

Dans un exemple d'application, le moteur 29 pourra être rappelé à la vis à billes 14 par l'intermédiaire de deux poulies 31 et une courroie 32.

Ainsi le dispositif de commande d'une boîte de vitesses mécanique, selon l'invention comporte un arbre primaire 1 et un arbre secondaire 3 parallèles portant les pignons correspondant aux différents rapports. Dans cette boîte de vitesses le changement de rapport s'effectue par le déplacement axial du croisillon 12 sur l'arbre 3 portant les pignons fous 5. Le croisillon 12 est actionné au moyen d'un système vis-écrou, l'écrou 13 étant monté dans le croisillon 12 et la vis 14 étant à l'intérieur de l'arbre correspondant 3 et supportée à chaque extrémité par le carter 27 de l'ensemble de la boîte de vitesses avec lequel elle est fixée en translation, l'écrou 13 étant solidaire en translation axiale avec le croisillon 12 qui est libre en rotation par rapport audit écrou 13.

L'écrou 13 est immobilisé en rotation par rapport au carter de la boîte de vitesses. Le croisillon 12 est solidaire en rotation de l'arbre secondaire 3 et est solidarisé avec le pignon fou correspondant au rapport choisi au moyen d'un système de crabotage. La vis 14 est actionnée à une de ses extrémités par un système de manoeuvre.

Le système de crabotage entre le croisillon 12 et le pignon fou 5 est constitué par des dents 24 qui sont aménagées sur le moyeu 33 dudit croisillon 12, et qui s'engagent dans des rainures 4 correspondantes aménagées dans l'arbre secondaire 3. Ces dents 24 dépassent de la périphérie dudit arbre secondaire 3 de manière à venir s'engager dans des encoches 20 aménagées dans les pignons fous 5.

De plus des pentes d'engagement 22 sont aménagées sur les encoches 20 du pignon fou 5, et des pentes d'engagement 25 sont aménagées sur les dents 24 du croisillon 12.

Il y a également des pentes d'antilâcher 23 qui sont aménagées sur les flancs des encoches 20 du pignon 5, et des pentes d'antilâcher 26 qui sont aménagées sur les flancs des dents 24 du croisillon 12. Les pentes d'antilâcher 26 ont un profil conjugué au profil des pentes d'antilâcher 23 avec lesquelles elles coopèrent de manière à assurer un effet d'antilâcher et autocentrant desdites dents 24 par rapport auxdites encoches 20.

Des écarteurs 6, se montent sur l'arbre secondaire 3 avec lequel ils sont solidaires en rotation au moyen de cannelures 34, et en translation au moyen du circlips 8 qui vient bloquer l'empilage desdits écarteurs 6 et des pignons fous 5 contre le pignon de descente 11 qui est monobloc avec l'arbre secondaire 3 ; chaque écarteur 6 étant disposé entre deux pignons fous 5 adjacents, afin d'éviter les frottements entre lesdits pignons fous 5.

Chaque écarteur 6 est constitué par un corps cylindrique 36 muni d'une collerette 35 avec les cannelures 34, qui comporte des rainures 7 qui coïncident avec les rainures 4 de l'arbre secondaire 3, un anneau 28 entourant la collerette 35 de manière à maintenir l'ensemble en un seul élément ; chaque côté de ladite collerette 35 coopérant avec l'évidement latéral 21 aménagé sur chacun des pignons fous 5 adjacents.

Le système de maintien de l'arbre secondaire 3 est constitué par un appui 9 en forme de tube cylindrique qui porte une bague 37 sur laquelle vient se monter le roulement 38 de la boîte de vitesses, l'appui 9 étant muni de crabots 39 qui s'engagent dans les rainures 4 de l'arbre secondaire 3, une pièce annulaire 10 venant s'engager à l'intérieur desdits crabots 39 et s'appuyer d'une part sur un lamage 40 dudit appui 9, et d'autre part sur un lamage 41 de l'arbre secondaire 3 ; l'ensemble étant relié par le circlips 8 qui s'engage dans une gorge 42 aménagée sur les crabots 39 et à l'extrémité de l'arbre secondaire 3.

L'écrou 13 est immobilisé en rotation au moyen d'une tige 17 qui le traverse et qui est fixée au carter 27 par l'intermédiaire de deux anneaux 18 fixés dans ledit carter 27. La vis 14 est supportée dans le carter 27 au moyen de roulements 19.

L'écrou 13 est monté dans le croisillon 12 au moyen d'une cage à aiguilles 16 et d'une douille 15. Le système vis-écrou est un système vis-écrou à billes.

Le système de manoeuvre comporte un moteur électrique 29 qui entraîne la vis 14 et qui est associé à un dispositif de comptage de tours 30, et il est piloté par un microprocesseur.

## Revendications

1°) Dispositif de commande d'une boîte de vitesses mécanique comportant un arbre primaire (1) et un arbre secondaire (3) parallèles portant les pignons correspondants aux différents rapports, boîte de vitesses dans laquelle le changement de rapport s'effectue par le déplacement axial du croisillon (12) sur l'arbre (3) portant les pignons fous (5), caractérisé en ce que ledit croisillon (12) est actionné au moyen d'un système vis-écrou, l'écrou (13) étant monté dans le croisillon (12) et la vis (14) étant à l'intérieur de l'arbre correspondant (3) et supportée à chaque extrémité par le carter (27) de l'ensemble de la boîte de vitesses avec lequel elle est fixée en translation, l'écrou (13) étant solidaire en translation axiale avec le croisillon (12) qui est libre en rotation par rapport audit écrou (13), l'écrou (13) étant immobilisé en rotation par rapport au carter, ledit croisillon (12) est solidaire en rotation de l'arbre secondaire (3) et est solidarisé avec le pignon fou correspondant au rapport choisi au moyen d'un système de crabotage et la vis (14) étant actionnée à une de ses extrémités par un système de manoeuvre.

2°) Dispositif de commande selon la revendication 1, caractérisé en ce que le système de crabotage entre le croisillon (12) et le pignon fou (5) est constitué par des dents (24) aménagées sur le moyeu (33) dudit croisillon (12), et qui s'engagent dans des rainures (4) correspondantes aménagées dans l'arbre secondaire (3) ; ces dents (24) dépassant de la périphérie dudit arbre secondaire (3) de manière à venir s'engager dans des encoches (20) aménagées dans les pignons fous (5).

3°) Dispositif de commande selon la revendication 2 caractérisé en ce que des pentes d'engagement (22) sont aménagées sur les encoches (20) du pignon fou (5), et que des pentes d'engagement (25) sont aménagées sur les dents (24) du croisillon (12).

4°) Dispositif de commande selon la revendication 2 caractérisé en ce que des pentes d'antilâcher (23) sont aménagées sur les flancs des encoches (20) du pignon fou (5), et que des pentes d'antilâcher (26) sont aménagées sur les flancs des dents (24) du croisillon (12) ; les pentes d'antilâcher (26) ayant un profil conjugué au profil des pentes d'antilâcher (23) avec lesquelles elles coopèrent de manière à assurer un effet d'antilâcher et autocentrant desdites dents (24) par rapport auxdites encoches (20).

5°) Dispositif de commande selon la revendication 2 caractérisé en ce qu'il comporte des écarteurs (6), qui se montent sur l'arbre secondaire (3) avec lequel ils sont solidaires en rotation au moyen de cannelures (34), et en translation au moyen du circlips (8) qui vient bloquer l'empilage desdits écarteurs (6) et des pignons fous (5) contre le pignon de descente (11) qui est monobloc avec l'arbre secondaire (3) ; chaque écarteur (6) étant disposé entre deux pignons fous (5) adjacents, afin d'éviter les frottements entre lesdits pignons fous (5).

6°) Dispositif de commande selon la revendication 5, caractérisé en ce que chaque écarteur (6) est constitué par un corps cylindrique (36) muni d'une collerette (35) avec les cannelures (34), qui comporte des rainures (7) qui coïncident avec les rainures (4) de l'arbre secondaire (3), un anneau (28) entourant la collerette (35) de manière à maintenir l'ensemble en un seul élément ; chaque côté de ladite collerette (35) coopérant avec l'évidement latéral (21) aménagé sur chacun des pignons fous (5) adjacents.

7°) Dispositif de commande selon la revendication 2, caractérisé en ce qu'il comporte un système de maintien de l'arbre secondaire (3) constitué par un appui (9) en forme de tube cylindrique qui porte une bague (37) sur laquelle vient se monter le roulement (38) de la boîte de vitesses, l'appui (9) étant muni de crabots (39) qui s'engagent dans les rainures (4) de l'arbre secondaire (3), une pièce annulaire (10) venant s'engager à l'intérieur desdits crabots (39) et s'appuyer d'une part sur un lamage (40) dudit appui (9), et d'autre part sur un lamage (41) de l'arbre secondaire (3) ; l'ensemble étant relié par le circlips (8) qui s'engage dans une gorge (42) aménagée sur les crabots (39) et à l'extrémité de l'arbre secondaire (3).

8°) Dispositif de commande selon la revendication 1, caractérisé en ce que l'écrou (13) est immobilisé en rotation au moyen d'une tige (17) qui le traverse et qui est fixée au carter (27) par l'intermédiaire de deux anneaux (18) fixés dans ledit carter (27).

9°) Dispositif de commande selon la revendication 1, caractérisé en ce que la vis (14) est supportée dans le carter (27) au moyen de roulements (19).

10°) Dispositif de commande selon la revendication 2, caractérisé en ce que l'écrou (13) est monté dans le croisillon (12) au moyen d'une cage à aiguilles (16) et d'une douille (15).

11°) Dispositif de commande selon la revendication 1, caractérisé en ce que le système vis-écrou est un système vis-écrou à billes.

12°) Dispositif de commande selon la revendication 1, caractérisé en ce que le système de manoeuvre comporte un moteur électrique (29) qui entraîne la vis (14) et qui est associé à un dispositif de comptage de tours (30).

13°) Dispositif de commande selon la revendication 12, caractérisé en ce que le système de manoeuvre est piloté par un microprocesseur.

FIG1

FIG.2

FIG.4

FIG.3

**FIG.5**

**FIG.6**

**FIG.7**

**FIG.8**

FIG.9

FIG.10

Office européen des brevets **RAPPORT DE RECHERCHE EUROPEENNE** Numero de la demande

EP 91 40 0375

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4716778 (C.SCARPINO)<br>* le document en entier * | 1-3,<br>7-10 | F16H3/08<br>F16H59/04 |
| A | FR-A-743793 (F.JARTON)<br>* figures 1, 5-10 * | 1, 2, 5,<br>6 | |
| A | DE-U-1848462 (GERVAIS FAUVARQUE)<br>* figures 1-4, 9 * | 1-3 | |
| A | DE-U-1850661 (FICHTEL&SACHS)<br>* le document en entier * | 1, 2, 8 | |
| A | AT-B-166090 (PORSCHE)<br>* figures 1, 3-6 * | 3, 4 | |
| A | FR-A-779355 (L.P.A.A BAILLEUL) | | |

**DOMAINES TECHNIQUES RECHERCHES (Int. Cl.5 )**

F16H
B60K

Le présent rapport a été établi pour toutes les revendications

| Lieu de la recherche | Date d'achèvement de la recherche | Examinateur |
|---|---|---|
| BERLIN | 27 MAI 1991 | GERTIG I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)